# EUROPÄISCHE PATENTSCHRIFT

(11) **EP 2 294 683 B1**
(45) Veröffentlichungstag und Bekanntmachung des Hinweises auf die Patenterteilung: **05.09.2018**
(21) Anmeldenummer: 08786255.3
(22) Anmeldetag: 18.07.2008
(51) Int. Cl.: H02M 7/162, H02J 9/00, H02M 1/36, H02M 1/32, H02M 1/14, H02M 1/00, H02M 1/12

(54) **SCHALTUNGSANORDNUNG MIT EINEM NETZEINGANG UND ARBEITSVERFAHREN ZUM ANSTEUERN EINER NETZEINGANGSSCHALTUNG**
CIRCUIT CONFIGURATION HAVING A POWER INPUT AND METHOD OF WORK FOR ACTUATING A POWER INPUT CIRCUIT
CIRCUITERIE COMPRENANT UNE ENTRÉE DE RÉSEAU ET TECHNIQUE PERMETTANT DE COMMANDER UN CIRCUIT D'ENTRÉE DE RÉSEAU

(30) Priorität: 03.07.2008 DE 102008031536
(43) Veröffentlichungstag der Anmeldung: 16.03.2011
(73) Patentinhaber: Fujitsu Technology Solutions Intellectual Property GmbH, 80807 München (DE)
(72) Erfinder: BUSCH, Peter, 86179 Augsburg (DE)
(74) Vertreter: Epping - Hermann - Fischer
(86) Internationale Anmeldenummer: PCT/EP2008/059475
(87) Internationale Veröffentlichungsnummer: WO 2010/000339

(56) Entgegenhaltungen:
- EP-A- 1 176 688
- EP-A- 1 783 887
- JP-A- H11 215 828
- US-A- 4 667 173
- US-A- 5 650 924
- US-A- 5 777 866
- US-A1- 2008 084 718

## Beschreibung

Die Erfindung betrifft eine Schaltungsanordnung mit einem Netzeingang und wenigstens einem Netzteil zum Erzeugen einer Gleichspannung zum Betrieb eines elektronisches Geräts. Die Anmeldung betrifft des Weiteren ein Arbeitsverfahren zum Ansteuern einer Netzeingangsschaltung, die zur Integration in eine derartige Schaltungsanordnung geeignet ist.

Schaltungsanordnungen mit einem Netzeingang und wenigstens einem Netzteil zum Erzeugen einer Gleichspannung zum Betrieb eines elektronischen Gerätes sind vielfach bekannt. Insbesondere benötigen eine immer größere Anzahl von Geräten der Kommunikations- und Unterhaltungselektronik wenigstens ein Netzteil, um aus der üblichen Netzwechselspannung von 230 Volt eine gleichgerichtete Niederspannung im Bereich von ein bis 24 Volt zu erzeugen. Dabei müssen die verwendeten Netzteile unterschiedlichen, sich teilweise widersprechenden Anforderungen genügen.

Zum Einen sollen die Netzteile elektronisch, das heißt ohne Betätigung eines mechanischen Netzschalters ein- und ausschaltbar sein. Dies hat unter anderem den Vorteil, dass auf hochspannungsfeste, verhältnismäßig teure Netzschalter und aufwändige Verkabelungen und elektromagnetische Schirmung in einem Gerätegehäuse verzichtet werden kann. Des Weiteren ist ein Einschalten eines solchen Gerätes auch über eine Zeituhr oder einer andere elektronische Steuerung möglich.

Zum Zweiten sollen das Netzteil und das daran angeschlossene Gerät in einem ausgeschalteten oder Bereitschaftszustand möglichst wenig Strom aus dem Stromnetz aufnehmen, um einem unnötigen Energieverbrauch entgegenzuwirken. Derzeitige Geräte verbrauchen in so genannten Bereitschafts- oder Standby-Betriebsarten in der Regel einige Watt Leistung, die zur unnötigen Emission von Treibhausgasen bei der Stromerzeugung führt.

Zum Dritten sollen sowohl der Wirkungsgrad des Netzteils möglichst groß und die von ihm ins Netz eingespeiste Störleistung möglichst gering ausfallen. Hierzu muss das Netzteil immer strengeren Anforderungen von Regulierungsbehörden und Netzbetreibern genügen.

Zum Versorgen verhältnismäßig großer und sich schnell ändernder Lasten werden in der Regel Schaltnetzteile mit vorgeschalteten Netzfiltern und Schaltungen zur Leistungsfaktorkorrektur verwendet. Zur Steuerung der Last wird in der Regel eine Taktfrequenz oder ein Tastverhältnis eines Steuersignals durch eine Steuerschaltung geregelt. Nachteilig an solchen Schaltungen ist, dass sie insbesondere im so genannten Standby-Betrieb, einer Betriebsart mit sehr geringer Ausgangsleistung, eine verhältnismäßig große Verlustleitung aufweisen.

Aus der US 2002/0012261 A1 ist eine Gleichrichterschaltung mit einem ersten Pfad mit einem ersten Gleichrichter und einem Strombegrenzungselement sowie mit einem zweiten Pfad mit einem zweiten Gleichrichter bekannt. Durch eine Steuerschaltung wird entweder der erste oder der zweite Pfad ausgewählt, um eine Last vor Stromspitzen zu schützen.

Aus der US 2008/0084718 A1 ist eine ähnliche Schaltungsanordnung bekannt, in der ein Umgehungsschalter dazu dient, eine Strombegrenzungsschaltung zu umgehen, sobald eine Speicherkondensator vollständig geladen ist.

Aus der US 5,650,924 ist eine Stromversorgungsschaltung für einen Monitor mit verminderter Energieaufnahme in einem abgeschalteten Zustand bekannt. Ein hinter einem Gleichrichter angeordneter Schalter dient dabei zur Unterbrechung der Energieversorgung im ausgeschalteten Zustand.

Aus der US 5,777,866 ist eine Schaltung zur verbesserten Leistungsfaktorkorrektur für Schaltnetzteile bekannt. Die Schaltung umfasst unter anderem hinter einem Netzfilter angeordnete Strommessmittel und einen Spannungsmesskondensator, der sein Eingangssignal von zwei von einer Gleichrichterschaltung gesonderten Dioden ableitet.

Aus der EP 1 783 887 A1 ist eine Steuerschaltung für eine Stromversorgung mit einer Energieaufnahme von null Watt in einem Bereitschaftsmodus bekannt. Die Schaltung umfasst unter anderem eine Treiberschaltung, ein Zwischenrelais und ein Lastrelais zum Trennen einer Netzeingangsspannung.

Der vorliegenden Erfindung liegt die Aufgabe zugrunde, eine Schaltungsanordnung zu beschreiben, die die oben genannten Anforderungen besonders gut erfüllt. Insbesondere sollen eine Schaltungsanordnung und ein Arbeitsverfahren zum Ansteuern einer Netzeingangsschaltung beschrieben werden, deren Leistungsaufnahme aus einem Stromnetz in einem Energiesparzustand möglichst gering ist. Bevorzugt soll die Anordnung in dem Energiesparzustand überhaupt keine elektrische Energie aus dem Stromnetz aufnehmen. Darüber hinaus soll die Schaltungsanordnung nach Möglichkeit keine mechanischen oder elektromechanischen Schaltelemente enthalten und verhältnismäßig einfach aufgebaut sein.
Die oben genannte Aufgabe wird durch eine Schaltungsanordnung mit Merkmalen gemäß Anspruch 1 gelöst.

Alle technischen Merkmale des unabhängigen Anspruchs sind erforderlich und nicht optional, unabhängig von diesem widersprechenden Aussagen in den folgenden Textpassagen. Bevorzugte Ausführungsformen werden in den abhängigen Ansprüchen beschrieben. Dadurch dass die Netzeingangsschaltung das wenigstens eine Netzteil wahlweise von der Netzspannung trennen kann, kann eine Verlustleistung in dem Energiesparzustand des wenigstens einen Netzteils vermieden werden. Durch wahlweises Gleichrichten der bereitgestellten Wechselspannung durch die Netzeingangsschaltung kann auf den Einsatz eines zusätzlichen Gleichrichters in oder vor dem wenigstens einen Netzteil verzichtet werden.
Durch Öffnen bzw. Ausschalten beider Halbleiterschaltelemente in dem Energiesparzustand kann die Leistungsaufnahme der Schaltungsanordnung vollständig oder fast vollständig vermieden werden. Durch Schließen bzw. Einschalten nur des ersten Halbleiterschaltelementes und Offenlassen des zweiten Halbleiterschaltelementes in einer Übergangsphase wird ein Stromstoß beim Schalten der Schaltungsanordnung in den Betriebszustand durch das Strombegrenzungselement begrenzt. Durch Schließen des zweiten Schaltelementes in einem Betriebszustand wird ein Entstehen einer unerwünschten Verlustleistung an dem Strombegrenzungselement vermieden.
Dabei fließt ein Laststrom für das wenigstens eine Netzteil alternativ in einem ersten elektrischen Lastpfad mit einem Strombegrenzungselement oder einem zweiten elektrischen Lastpfad von dem Netzeingang zu dem Netzteil. Durch die Verwendung eines Strombegrenzungselementes in dem ersten Lastpfad kann eine Überlastung der bereitgestellten Wechselspannung durch das Netzteil beim Einschalten vermieden werden. Durch Schalten des zweiten elektrischen Lastpfades kann eine Verlustleistung durch das Strombegrenzungselement im normalen Betrieb des Netzteiles vermieden werden.

Gemäß einer vorteilhaften Ausgestaltung ist das wenigstens eine Halbleiterschaltelement und/oder das wenigstens zweite Halbleiterschaltelement ein Thyristor. Die Verwendung eines Thyristors ermöglicht eine wahlweise Trennung oder Gleichrichtung einer bereitgestellten Wechselspannung durch einen verhältnismäßig einfachen Schaltungsaufbau.

Gemäß einer vorteilhaften Ausgestaltung umfasst die Netzeingangsschaltung wenigstens eine Gleichrichterschaltung mit einem Halbleiterbrückengleichrichter und das wenigstens eine zweite Halbleiterschaltelement bildet einen Teil des Halbleiterbrückengleichrichters. Durch Kombination der Funktionen des wahlweisen Trennens oder Gleichrichtens in dem zweiten Halbleiterschaltelement wird die Verlustleistung der Netzeingangsschaltung reduziert.

Gemäß einer weiteren vorteilhaften Ausgestaltung ist die Schaltungsanordnung durch ein Überspannungsfilter gekennzeichnet, wobei das Überspannungsfilter zwischen der Netzeingangsschaltung und dem wenigstens einen Netzteil angeordnet ist. Durch die Anordnung des Überspannungsfilters hinter der Netzeingangsschaltung verbraucht dieser im Energiesparzustand der Schaltungsanordnung keine elektrische Energie.

Gemäß einer weiteren vorteilhaften Ausgestaltung ist die Schaltungsanordnung dazu eingerichtet, die Ansteuerschaltung in dem Energiesparzustand und/oder der Übergangsphase durch einen bevorzugt in dem elektronischen Gerät angeordneten Energiespeicher mit Energie zu versorgen. Durch die Versorgung der Ansteuerschaltung in der Übergangsphase und/oder dem Energiesparzustand aus dem Energiespeicher kann auf die Entnahme elektrischer Leistung in diesen Zuständen aus dem Netzeingang verzichtet werden.
Gemäß einer vorteilhaften Ausgestaltung ist die Schaltungsanordnung dazu eingerichtet, die Ansteuerschaltung im Betriebszustand durch das wenigstens eine Netzteil mit Energie zu versorgen. Durch Versorgung der Ansteuerschaltung im Betriebszustand durch das wenigstens eine Netzteil kann die Belastung eines Energiespeichers reduziert werden.
Gemäß einer weiteren vorteilhaften Ausgestaltung umfasst die Ansteuerschaltung wenigstens ein drittes Halbleiterschaltelement, durch das eine erste Ansteuerschaltung zur Ansteuerung des wenigstens einen ersten Halbleiterschaltelementes und eine zweite Ansteuerschaltung zur Ansteuerung des wenigstens einen zweiten Halbleiterschaltelementes miteinander koppelbar sind. Durch selektive Kopplung einer ersten Ansteuerschaltung und einer zweiten Ansteuerschaltung kann die schaltungstechnische Ansteuerung des ersten und des zweiten Halbleiterelementes vereinfacht werden.
Gemäß eines zweiten Aspekts der Erfindung wird ein Arbeitsverfahren nach Anspruch 14 zum Ansteuern einer Netzeingangsschaltung mit wenigstens einem ersten Halbleiterschaltelement zum Schalten eines ersten elektrischen Lastpfades mit einem Strombegrenzungselement von einem Netzeingang zu wenigstens einem Netzteil und wenigstens einem zweiten Halbleiterschaltelement zum Schalten eines zweiten elektrischen Lastpfads von dem Netzeingang zu dem Netzteil beschrieben. Das Arbeitsverfahren umfasst die Schritte:
- Öffnen des ersten und des zweiten Halbleiterschaltelementes in einem Energiesparzustand,
- zumindest zeitweise Schließen des ersten Halbleiterschaltelementes und Offenlassen des wenigstens einen zweiten Halbleiterschaltelementes in einer Übergangsphase von dem Energiesparzustand in einen Betriebszustand, wobei in der Übergangsphase ein getaktetes Steuersignal mit einer ersten Ansteuerfrequenz erzeugt wird, und
- zumindest zeitweise Schließen wenigstens des zweiten Halbleiterschaltelementes in dem Betriebszustand wobei in dem Betriebszustand ein getaktetes Steuersignal mit einer zweiten Ansteuerfrequenz erzeugt wird, die größer ist als die erste Ansteuerfrequenz.

Durch ein solches Arbeitsverfahren wird in einem Energiesparzustand zunächst eine elektrische Verbindung zwischen dem Netzeingang und dem Netzteil unterbrochen, um eine Leistungsaufnahme zu vermeiden beziehungsweise zu minimieren. In einem weiteren Schritt wird zunächst das erste Halbleiterschaltelement geschlossen, um einen anfänglichen Betriebsstrom über den ersten elektrischen Lastpfad an das Netzteil bereitzustellen, wobei das Strombegrenzungselement ein Ansteigen der Stromaufnahme begrenzt. In dem Betriebszustand wird schließlich durch Schließen des zweiten Halbleiterschaltelementes eine durch das Strombegrenzungselement verursachte Verlustleistung vermieden.

Weitere vorteilhafte Ausgestaltungen der Erfindung sind in den Unteransprüchen und der nachfolgenden Beschreibung offenbart. Die Erfindung wird unter Bezugnahme auf Ausführungsbeispiele anhand der nachfolgenden Figuren näher erläutert. In der folgenden Beschreibung wurde möglicherweise der Ausdruck "Ausführungsform", bzw. "Ausführungsbeispiel" für Gegenstände benutzt, die nicht in den Schutzumfang der Ansprüche fallen. Nur Beispiele, die alle Merkmale des unabhängigen Anspruchs enthalten, sind Teil der Erfindung und damit "Ausführungsformen", bzw. "Ausführungsbeispiele". Teile der Beschreibung die nicht in den Schutzumfang der Ansprüche fallen stellen den Stand der Technik dar und/oder dienen dem Verständnis der Erfindung.

In den Figuren zeigen:
- Figur 1: eine schematische Darstellung einer Schaltungsanordnung mit einer Netzeingangsschaltung,
- Figur 2: eine konventionelle Netzeingangsschaltung,
- Figur 3: eine Netzeingangsschaltung gemäß einem ersten Ausführungsbeispiel der Erfindung,
- Figur 4: ein Zustandsdiagramm für ein Arbeitsverfahren zur Ansteuerung einer Netzeingangsschaltung, und
- Figur 5: eine Netzeingangsschaltung gemäß einem zweiten Ausführungsbeispiel der Erfindung.

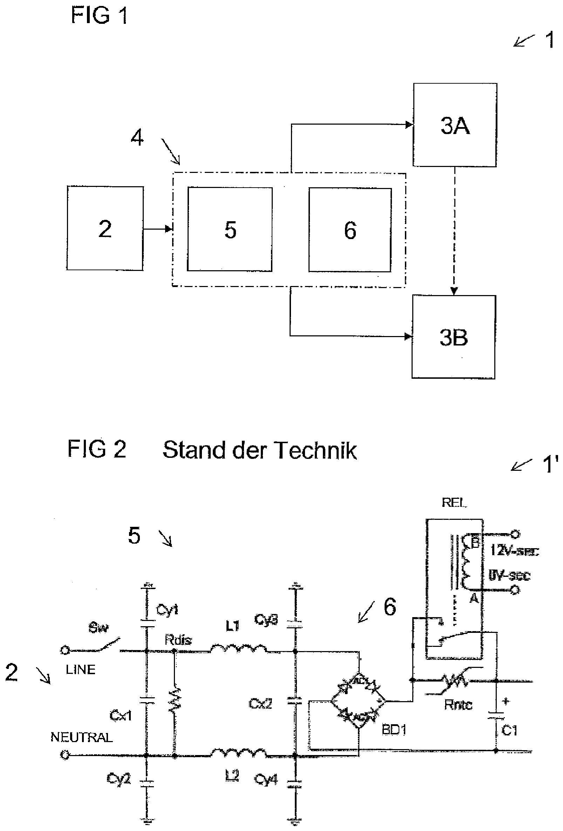

Figur 1 zeigt eine schematische Darstellung einer Schaltungsanordnung 1 zur Versorgung eines elektronischen Gerätes mit einer Betriebsspannung. Die Schaltungsanordnung 1 gemäß Figur 1 umfasst einen Netzeingang 2, eine Netzeingangsschaltung 4 und ein erstes und ein zweites Netzteil 3A und 3B.
Der Netzeingang 2 dient zur Kopplung der Schaltungsanordnung 1 mit einer Wechselspannung eines Stromversorgungsnetzes, beispielsweise eines Wechselstromnetzes mit einer Spannung von 230 Volt. Die Netzeingangsschaltung 4 dient zur Aufbereitung und Filterung der von dem Netzeingang 2 empfangenen Wechselspannung für die nachgeschalteten Netzteile 3A und 3B.

In der Figur 1 ist eine Anordnung mit zwei Netzteilen 3A und 3B dargestellt. Beispielsweise handelt es sich bei dem ersten Netzteil 3A um ein Hilfsnetzteil zur Versorgung des elektronischen Gerätes in einer Betriebsart mit reduzierter Leistungsaufnahme und bei dem zweiten Netzteil 3B um ein Hauptnetzteil für den normalen Betrieb des elektronischen Gerätes. Optional ist das erste Netzteil 3A elektrisch mit dem zweiten Netzteil 3B verbunden, beispielsweise um einen Startvorgang zum Starten des zweiten Netzteils 3B durch das ersten Netzteil 3A zu ermöglichen.

Die Verwendung zweier unterschiedlich dimensionierter Netzteile weist den Vorteil auf, dass auch in einer Betriebsart mit einer verminderten Leistungsaufnahme ein verhältnismäßiger großer Wirkungsgrad der Schaltungsanordnung erzielt werden kann. Selbstverständlich eignet sich die hierin beschriebene Netzeingangsschaltung auch für solche Anordnungen mit nur einem einzelnen Netzteil.

In der schematischen Darstellung gemäß Figur 1 umfasst die Netzeingangsschaltung 4 ein Netzeingangsfilter 5 und eine Gleichrichterschaltung 6. Das Netzeingangsfilter filtert Störungen des Stromversorgungsnetzes und/oder durch die Netzteile 3A und 3B verursachte Störungen. Insbesondere bei der Verwendung von Schaltnetzteilen treten durch deren Schaltbetrieb verhältnismäßig große, hochfrequente Eingangsströme an den Netzteilen 3A und 3B auf, die zu einer Störung des Stromversorgungsnetzes führen könnten. Daher umfasst das Netzeingangsfilter 5 beispielsweise ein Tiefpassfilter.

Bevor auf die verschiedenen Ausführungsbeispiele zur Lösung des zugrunde liegenden Problems eingegangen wird, wird zunächst eine konventionelle Schaltungsanordnung erläutert. Figur 2 zeigt eine Schaltungsanordnung 1' gemäß des Stands der Technik. Die Schaltungsanordnung 1' umfasst einen Netzeingang 2 in Form eines Phaseneingangs LINE und eines Nullleiters NEUTRAL, die über ein Netzeingangsfilter 5 mit einer Gleichrichterschaltung 6 in Form eines Brückengleichrichters BD1 gekoppelt sind. Das Netzeingangsfilter 5 umfasst zwischen dem Phaseneingang LINE und dem Nulleiter NEUTRAL angeordnete x-Kondensatoren Cx1 und Cx2, zwischen dem Phasenanschluss LINE beziehungsweise dem Nullleiter NEUTRAL und elektrischer Masse angeordnete y-Kondensatoren Cy1, Cy2, Cy3 und Cy4, in der Phasenleitung LINE beziehungsweise dem Nullleiter NEUTRAL angeordnete Entstördrosseln L1 beziehungsweise L2 sowie einen zwischen die Phasenleitung LINE und den Nullleiter NEUTRAL geschalteten Widerstand Rdis. Der Brückengleichrichter BD1 umfasst vier Dioden, die in einer so genannten Graetz-Brücke angeordnet sind und die eine Wechselspannung an den Anschlüssen AC1 und AC2 in eine pulsierende Gleichspannung an den Anschlüssen + und - umwandeln. Das eigentliche Netzteil ist in der Figur 2 nicht dargestellt. In der Schaltungsanordnung 1' der Figur 2 würde es parallel zu dem mit C1 bezeichneten Speicherkondensator angeschlossen.

Um einen großen Ladestrom beim Einschalten des Netzteiles durch den Schalter Sw in der Phasenleitung LINE zu vermeiden, ist zwischen dem Gleichrichter BD1 und den Speicherkondensator C1 ein Strombegrenzungselement in Form eines Heißleiters Rntc geschaltet. Der NTC-Widerstand begrenzt den Ladestrom des Kondensators C1 beim Einschalten. Um die parasitäre Last des NTC-Widerstandes Rntc im Betrieb der Schaltungsanordnung 1 zu vermeiden, ist ein monostabiles Relais REL vorgesehen.

Durch Anlegen einer Spannung von beispielsweise zwölf Volt zwischen den Steueranschlüssen A und B des Relais REL kann das Strombegrenzungselement Rntc überbrückt werden.
Ein Nachteil der in der Figur 2 dargestellten Schaltungsanordnung 1' besteht darin, dass das Relais REL im Betriebszustand ständig mit einer Versorgungsspannung versorgt werden muss, um das Strombegrenzungselement zu überbrücken. Ein weiterer Nachteil besteht darin, dass das Netzeingangsfilter 5 und der Speicherkondensator C1 bei geschlossenem Schalter Sw stets mit dem Stromversorgungsnetz verbunden ist. Selbst wenn ein Netzteil somit keine Ladung aus dem Speicherkondensator C1 entnähme, würde das Netzeingangsfilter 5 zu einer Schein- und Verlustleistung durch die Schaltungsanordnung 1 führen. Auch der Entladewiderstand Rdis des Netzeingangsfilters 5 trägt zur Verlustleistung der Schaltungsanordnung 1' in einem abgeschalteten oder Energiesparzustand des Netzteils 3 bei. Er ist aus Sicherheitsgründen erforderlich, um die netzseitigen x-Kondensatoren Cx1 bis Cx2 des Netzeingangsfilters 5, die beispielsweise eine Kapazität von mehr als 100 nF aufweisen, bei einer Netztrennung kontrolliert zu entladen. Schließlich muss der Schalter Sw stromstoßfest ausgestaltet sein, um ein sicheres und wiederholtes Ein- und Ausschalten der Schaltungsanordnung 1' zu gewährleisten.

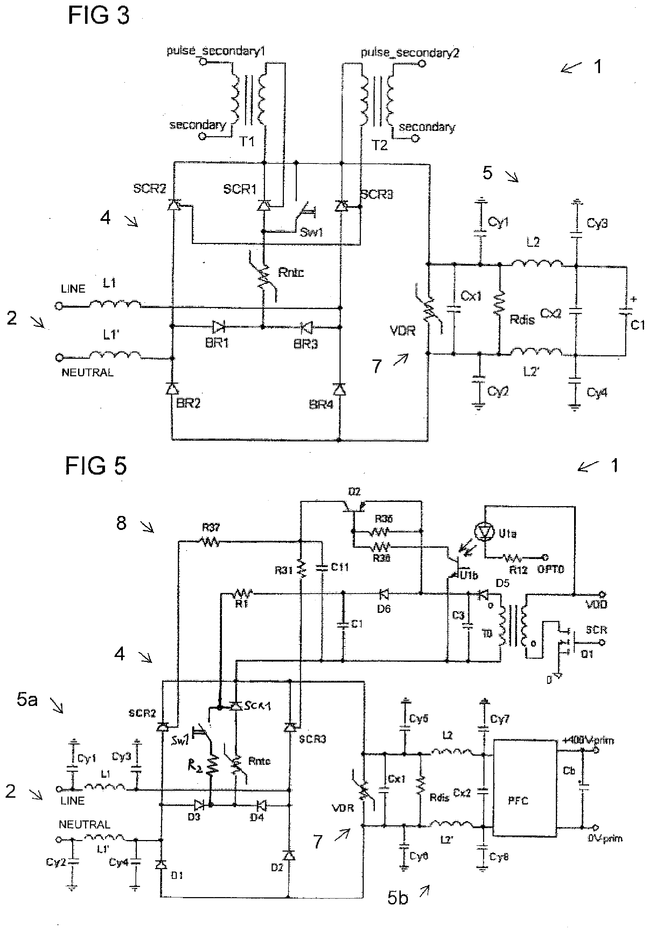

Figur 3 zeigt eine Schaltungsanordnung 1 gemäß einer Ausgestaltung der Erfindung. Die Schaltungsanordnung 1 umfasst wiederum einen Netzeingang 2 mit einer Phasenleitung LINE und einem Nullleiter NEUTRAL. Zusätzlich weist der Netzeingang 2 zwei sehr klein dimensionierte Filterelemente L1 und L1' auf. Beispielsweise handelt es sich hierbei um ringförmige Ferritelemente, durch die eine Netzeingangsleitung der Schaltanordnung 1 geführt ist. Des Weiteren umfasst die Schaltungsanordnung 1 eine Netzeingangsschaltung 4 umfassend vier Dioden BR1 bis BR4 sowie drei Thyristoren SCR1 bis SCR3. Die Netzeingangsschaltung 4 umfasst des Weiteren ein Strombegrenzungselement in Form eines Heißleiters Rntc sowie einen Taster Sw1 zum Überbrücken des Thyristors SCR1. Der Taster Sw1 dient zur kurzzeitigen Umschaltung zwischen dem Energiesparzustand ohne Leistungsentnahme aus dem Stromversorgungsnetz und einem konventionellen Standby- oder Bereitschaftszustand, in dem eine Leistung aus dem Stromversorgungsnetz entnommen wird. Diese Überbrückung kann beispielsweise dazu verwendete werden, den Speicherkondensator C1 aufzuladen und so den Start eines Netzteiles 3 auch dann noch zu ermöglichen, wenn eine Aktivierung des Thyristors SCR1 sekundärseitig nicht mehr möglich ist, beispielsweise weil eine dazu vorgesehene Batteriezelle vollständig entladen wurde.

Am Ausgang der Netzeingangsschaltung 4 ist ein Überspannungsfilter 7 in Form eines spannungsabhängigen Widerstands VDR angeordnet. Der Widerstand VDR ist für die Funktion der Schaltungsanordnung 1 jedoch nicht erforderlich. Schließlich umfasst die Schaltungsanordnung 1 ein Netzeingangsfilter 5, der zwischen der Netzeingangsschaltung 4 und einem Speicherkondensator C1 angeordnet ist. Parallel zu dem Speicherkondensator C1 ist ein in der Figur 3 nicht dargestelltes Netzteil 3 angeschlossen.

Die Netzeingangsschaltung 4 wird durch zwei Übertrager T1 und T2 angesteuert. Die hierfür benötigte Ansteuerschaltung ist in der Figur 3 jedoch nicht dargestellt.

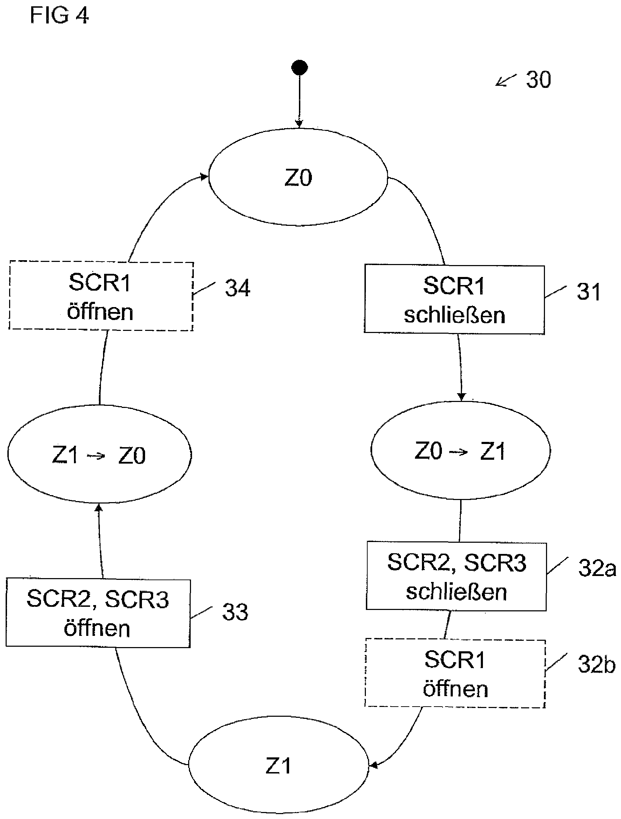

Die Funktion der Schaltung gemäß Figur 3 wird unter Zuhilfenahme des Zustandsdiagramms gemäß Figur 4 näher erläutert.

In einem ausgeschalteten oder Energiesparzustand Z0 sperren die Thyristoren SCR1 bis SCR3. Somit gibt es keinen elektrisch leitenden Pfad vom Netzeingang LINE zum Nulleiter NEUTRAL, so dass in der Figur 3 kein Strom fließt und weder eine Verlustleistung noch eine Scheinleistung auftreten.

Durch Anlegen einer Signalfolge von Pulsen an den Übertrager T1 wird eine Pulsfolge an den Steueranschluss des Thyristors SCR1 übertragen. Da in der Schaltung gemäß Figur 3 keine netzseitige Nulldurchgangserkennung durchgeführt wird, kann gemäß einer ersten Ausgestaltung eine dauerhafte Gleichspannung als Steuersignal an den Thyristor SCR1 angelegt werden. Zur Funktion der Schaltung ist es bei einer Netzfrequenz von 50 Hz jedoch ausreichend, circa alle 2ms einen Ansteuerimpuls zu erzeugen, so dass der Thyristor etwa zehnmal pro Netzwelle gezündet wird. Dies führt dazu, dass der Thyristor SCR1 in einer ersten Richtung leitfähig wird und somit als Halbleiterschaltelement wirkt. Dies ist in der Figur 4 als Schritt 31 dargestellt.

Liegt an der Phasenleitung LINE eine positive Halbwelle an, fließt in der Schaltung gemäß Figur 3 der Strom von dem Phaseneingang LINE über das Filterelement L1, die Diode BR3, das Strombegrenzungselement Rntc, den Thyristor SCR1 zu dem Netzeingangsfilter 5 und dem Speicherkondensator C1. Der Rückfluss von dem Netzeingangsfilter 5 und dem Speicherkondensator C1 erfolgt über die Diode BR2 und das Filterelement L1' zum Nullleiter NEUTRAL. Im umgekehrten Fall, das heißt bei negativer Halbwelle am Phaseneingang LINE, fließt ein Strom von dem Nullleiter NEUTRAL über das Filterelement L1', die Diode BR1, den Heißleiter Rntc, den Thyristor SCR1 zu dem Netzeingangsfilter 5 und den Speicherkondensator C1 und von dort zurück über die Diode BR4 und das Filterelement L1 zu dem Phaseneingang LINE.

Durch die Verschaltung der Phasenleitung LINE und des Nullleiter NEUTRAL über die Dioden BR1, BR2, BR3 und BR4 kann der Thyristor SCR1 somit in beiden Halbwellen zum Aktivieren beziehungsweise Deaktivieren der Schaltungsanordnung 1 eingesetzt werden. Somit ist zum Aufladen des Speicherkondensators C1 nur ein einzelnes Schaltelement in der Schaltungsanordnung 1 erforderlich.

Ist der Speicherkondensator C1 geladen und hat ein daran angeschlossenes Netzteil 3 den Betrieb aufgenommen, werden in einem weiteren Schritt 32a auch die Thyristoren SCR2 und SCR3 angesteuert. Dies erfolgt gemäß Figur 3 durch Anlegen eines zweiten Steuersignals an den zweiten Übertrager T2. Der Ausgang des zweiten Übertragers T2 ist mit beiden Thyristoren SCR2 und SCR3 verbunden, so dass diese im dargestellten Ausführungsbeispiel gemeinsam angesteuert werden. Optional kann gleichzeitig oder nachfolgend der Thyristor SCR1 in einem Schritt 32b geöffnet werden, beispielsweise indem keine weiteren Steuersignale an den ersten Übertrager T1 übermittelt werden. Dies ist für die Funktion und den Wirkungsgrad der Schaltungsanordnung 1 jedoch unwesentlich, weil der Strom bei gezündeten Thyristoren SCR2 bzw. SCR3 stets den Pfad des geringsten elektrischen Widerstands wählt.

Vorteilhafterweise erfolgt die Ansteuerung der Thyristoren SCR2 und SCR3 mit einer höheren Frequenz als die Ansteuerung des Thyristors SCR1, beispielsweise einer Frequenz von 1 kHz. Je noch Phasenlage der Netzspannung und Güte des Netzeingangsfilters kann es dabei jedoch zu verhältnismäßig großen Stromstößen und/oder der Erzeugung von Pfeifgeräuschen kommen. Um dies zu vermeiden empfiehlt sich daher eine Ansteuerfrequenz von etwa 3 kHz oder noch besser 5 kHz. Eine gegenüber der Frequenz des Stromversorgungsnetzes große Ansteuerfrequenz weist den Vorteil auf, dass keine großen Ladeunterbrechungen nach einem Nulldurchgang der Versorgungsspannung auftreten und so ein Störpegel der Schaltungsanordnung weiter reduziert wird. Zur weiteren Verbesserung der Ansteuerschaltung kann das zur Ansteuerung des Übertragers T2 verwendete Tastverhältnis gegenüber dem Tastverhältnis des Übertragers T1 größer gewählt werden, um die kürzeren Ansteuerperioden auszugleichen und ein sicheres Zünder der Thyristoren SCR2 und SCR3 zu gewährleisten.

Bei einer positiven Halbwelle an der Phasenleitung LINE fließt ein Strom über das Filterelement L1, den Thyristor SCR3 zu dem Netzeingangsfilter 5 und dem Speicherkondensator C1. Von dort fließt der Strom zurück über die Diode BR2 und das Filterelement L1' zu dem Nullleiter NEUTRAL. Im umgekehrten Fall, also bei negativer Halbwelle, fließt ein Strom von dem Nullleiter NEUTRAL über das Filterelement L1' und den Thyristor SCR2 zu dem Netzeingangsfilter 5 und dem Speicherkondensator C1. Der Strom fließt von dort zurück über die Diode BR4 und das Filterelement L1 zu dem Phaseneingang LINE.

In der Schaltungsanordnung gemäß Figur 1 mit einem ersten Netzteil 3a und einem zweiten Netzteil 3b kann auch ein mehrstufiges Einschaltverfahren Verwendung finden. Beispielsweise ist es möglich, nach dem anfänglichen Laden des Speicherkondensators C1 nur das erste Netzteil 3a, beispielsweise ein verhältnismäßig leistungsschwaches Hilfsnetzteil, zu starten und den Ausgangsstrom des ersten Netzteiles 3a dazu zu verwenden, die Thyristoren SCR2 und SCR3 anzusteuern. Erst dann wird durch eine entsprechende Steuervorrichtung, beispielsweise einen Mikrocontroller, auch das zweite Netzteil 3b, beispielsweise ein leitungsstärkeres Hauptnetzteil, gestartet.
Wie in der Figur 4 des Weiteren dargestellt ist, kann auch beim Schalten des Schaltungsanordnung 1 von dem Betriebszustand Z1 in den Energiesparzustand Z0 ein im Wesentlichen umgekehrter Schaltablauf angewendet werden. Dabei werden in einem Schritt 33 zunächst die Thyristoren 33 geöffnet. Ist der Thyristor SCR1 zu diesem Zeitpunkt noch geschlossen, fließt der Strom zum Betreib des Netzteiles 3 nun wieder über das Strombegrenzungselement Rntc. Ist er bereits geöffnet, wird ein Stromfluss sofort unterbunden. Selbstverständlich ist es auch möglich, den Thyristor SCR1 zeitgleich mit den Thyristoren SCR2 und SCR3 zu deaktivieren, beispielsweise in dem geeignete Ansteuersignale gemeinsam deaktiviert werden.

Das Schließen bzw. Geschlossenlassen des ersten Halbleiterschaltelementes, beispielsweise durch Versorgung des Thyristors SCR1 mit einem fortgesetzten Ansteuersignal, weist insbesondere bei einem Ausfall oder einer Störung eines mit dem Netzeingang 2 verbundenen Versorgungsnetzes Vorteile auf. Bricht eine Netzspannung nur kurzfristig zusammen, kann über den durch das Strombegrenzungselement Rntc gekennzeichneten Lastpfad ein Stromstoß beim Wiederbereitstellen der Versorgungsspannung vermieden werden. Gleichzeitig wird der kontinuierliche Betrieb des oder der Netzteile aufrechterhalten, wenn die Störung nur so kurz andauert, dass sie durch den Speicherkondensator C1 überbrückt werden kann.

In einem weiteren, optionalen Schritt 34 wird auch der Thyristor SCR1 geöffnet bzw. nicht mehr angesteuert, so dass das Netzteil 3 und das Netzfilter 5 durch die Netzeingangsschaltung 4 vom Stromversorgungsnetz getrennt werden. Somit kehrt die Schaltungsanordnung in den Betriebszustand Z0 zurück, in dem sie keine elektrische Leistung mehr verbraucht.

Die Schaltungsanordnung 1 gemäß Figur 3 weist gegenüber der Schaltungsanordnung 1' gemäß Figur 2 mehrere Vorteile auf. Zum Einen kann auf den Einsatz eines Relais verzichtet werden. Durch die Verwendung von ausschließlich Halbleiterbauelementen zum Trennen beziehungsweise Verbinden des Netzteils 3 von dem Netzeingang 2 wird die Betriebssicherheit der Schaltungsanordnung 1 erhöht.

Des Weiteren wird durch die Anordnung der Thyristoren SCR2 und SCR3 in einer Brückenschaltung zugleich eine Gleichrichterfunktion bewirkt. Durch die Vereinigung der Funktionen Netztrennung und Gleichrichtung wird der durch die Schaltungsanordnung 1 insgesamt erreichte Wirkungsgrad verbessert. Zwar fällt an den Thyristoren SCR2 und SCR3 eine geringfügig höhere Spannung ab als an den Dioden eines konventionellen Brückengleichrichters, diese zusätzliche Verlustleistung wird durch Vermeidung des Relais zur Überbrückung des Heißleiters Rntc bzw. eines zusätzlichen Gleichrichters jedoch mehr als ausgeglichen.

Beispielsweise tritt bei einer Gleichrichterschaltung aufweisend je einen Thyristor mit einem Spannungsabfall von 1,0 V und je eine Diode mit einem Spannungsabfall von 0,8 V pro Phase ein Spannungsabfall von 1,8 V auf. Bei einer Gleichrichterschaltung mit zwei Dioden pro Phase tritt dagegen ein Spannungsabfall von nur 1,6 V auf. Bei einem durchschnittlichen Laststrom von 0,5 A entspricht der zusätzliche Spannungsabfall von 0,2 V einem Mehraufwand von 0,1 W im Betrieb. Diesem Mehraufwand steht die Einsparung der Ansteuerung eines zusätzliches Relais im Betrieb und der zusätzlichen Energieeinsparung im Energiesparzustand gegenüber, so dass sich insgesamt eine positive Energiebilanz ergibt.

Zudem weist die Schaltungsanordnung 1 gemäß Figur 3 primärseitig, also zwischen Netzeingang 2 und der Netzeingangsschaltung 4 keine Entstörkondensatoren auf. Der zur Entladung des Speicherkondensators C1 eingesetzte Widerstand Rdis wird durch die Netzeingangsschaltung 4 ebenfalls vom Netzeingang 2 getrennt. Somit tritt bei geöffneten Thyristoren SCR1 bis SCR3 an dem Netzeingang 2 keine Verlust- oder Blindleistung auf.

Schließlich entsteht kein wesentlich erhöhter Bauteilbedarf gegenüber konventionellen Schaltungsanordnungen zur Stromversorgung. Zwar bedarf die Schaltungsanordnung der Halbleiterschaltelemente SCR1 bis SCR3, dafür sind jedoch keine mechanischen Relais oder Schalter mehr notwendig. Zudem ersetzen die als Schaltelemente verwendete Thyristoren SCR2 und SCR3 teilweise die in konventionellen Schaltungen verwendeten Gleichrichterdioden.
Figur 5 zeigt ein weiteres Ausführungsbeispiel einer Schaltungsanordnung 1 gemäß der Erfindung. Die Schaltungsanordnung 1 gemäß Figur 5 umfasst eine erste Filterschaltung 5A, die zwischen einem Netzeingang 2 und einer Netzeingangsschaltung 4 angeordnet ist. Des Weiteren umfasst die Schaltungsanordnung 1 ein Überspannungsfilter 7 sowie eine zweite Filterschaltung 5B, die elektrisch hinter der Netzeingangsschaltung angeordnet sind. Zusammen bilden die Filterschaltungen 5A und 5B ein Netzeingangsfilter 5. Hinter dem zweiten Netzeingangsfilter 5B ist eine Schaltung zur aktiven Leistungsfaktorkorrektur PFC angeordnet. Die Schaltung zur Leistungsfaktorkorrektur PFC dient zur Verringerung von durch ein Schaltnetzteil erzeugten Störungen in dem Stromversorgungsnetz. Hinter der Schaltung zur Leistungsfaktorkorrektur PFC ist ein Speicherkondensator Cb und ein in der Figur 5 nicht dargestelltes Schaltnetzteil 3 angeschlossen.
Die Netzeingangsschaltung 4 ist identisch mit der in der Figur 3 dargestellten Netzeingangsschaltung 4. Sie umfasst wiederum drei Thyristoren SCR1 bis SCR3 sowie vier Dioden D1 bis D4, die zusammen eine abschaltbare Gleichrichterschaltung 6 bilden. Zudem umfasst die Netzeingangschaltung 4 in einem ersten elektrischen Lastpfad ein Strombegrenzungselement in Form eines Heißleiters Rntc und in einem zweiten elektrischen Lastpfad über die Thyristoren SCR2 beziehungsweise SCR3 kein solches Strombegrenzungsmittel.

Die Figur 5 zeigt zusätzlich eine Ansteuerschaltung 8 zur Ansteuerung der Thyristoren SCR1 bis SCR3. Die Ansteuerschaltung 8 weist im Unterschied zur Schaltungsanordnung in Figur 3 nur einen einzelnen Übertrager T0 auf.

Der Übertrager T0 wird von einem MOSFET-Transistor Q1 mittels eines Steuersignals SCR mit einem Pulssignal versorgt. Im Ausführungsbeispiel gemäß Figur 5 dient der Übertrager T0 zunächst zur Ansteuerung des ersten Thyristors SCR1 mit Rechteckimpulsen einer ersten Ansteuerfrequenz, beispielsweise 500 Hz. Alternativ kann auch eine variable, dichter werdende Folge von Ansteuerimpulsen erzeugt werden, um ein Zünden des Thyristors SCR1 in jeder Phasenlage sicher zu gewährleisten. Eine solches, verhältnismäßig niederfrequentes Ansteuersignal kann durch eine sekundäre Spannungsquelle erzeugt werden. Hierzu eignet sich beispielsweise eine in die Schaltungsanordnung 1 oder in ein daran angeschlossenes elektronisches Gerät eingebaute Batteriezelle wie etwa die CMOS-Batterie eines Computers oder Laptops.

Durch Anlegen eines Rechteckimpulses an den Übertrager T0 wird dieser zunächst aufmagnetisiert. Beim Abfallen der Anregungsspannung wird durch den Magnetisierungsstrom von T0 der Kondensator C3 über Diode D5 und weiterhin der Kondensator C1 über die Diode D6 geladen. Über den Vorwiderstand R1 wird dann der Thyristor SCR1 gezündet. Dadurch stellt sich am Kondensator C3 eine Spannung ein, die der Steuerspannung des Thyristors SCR1, dem Spannungsabfall am Widerstand R1 und der zusätzlichen Vorwärtsspannung der Diode D6 entspricht, beispielsweise 1,4 bis 2 V.

Durch Schließen eines Transistors Q2 der Ansteuerschaltung 8 können zusätzlich auch die Thyristoren SCR2 und SCR3 durch den Übertrager T0 angesteuert werden. Hierzu wird ein Steuereingang OPTO eines Optokoppler U1 auf Masse gezogen, um ein Steuersignal für den Transistor Q2 zu erzeugen. Dabei sind die Widerstände R35 und R36 so dimensioniert, dass der Transistor Q2 mit reichlich Basisstrom versorgt wird und ein Spannungsabfall an der Kollektor-Emitterstrecke von Q2 gering ausfällt, beispielsweise 0,4 V.

Auf diese Weise wird das von dem Übertrager T0 erzeugte Pulssignal auch für die Thyristoren SCR2 und SCR3 bereitgestellt. Wie oben beschrieben wird der Übertrager T0 hierzu bevorzugt mit einer höheren Taktfrequenz, beispielsweise 1 kHz, und einem größeren Tastverhältnis angesteuert. Die Diode D6 dient dazu, eine Ladespannung am Kondensator C3 gegenüber der Spannung am Kondensator C1 künstlich anzuheben, um eine Spannungsreserve zur Ansteuerung der Thyristoren SCR2 und SCR3 gegenüber der Ansteuerung von SCR1 zu haben. Auf diese Wiese ist sichergestellt, dass in dem normalen Betriebszustand Z1 die Thyristoren SCR2 und SCR3 stets sicher zünden und durch Überbrücken des Strombegrenzungselements Rntc keine Verlustleistung auftritt. Gleichzeitig wird der Thyristor SCR1 nicht mehr angesteuert, da an seinem Steueranschluss nur noch eine verminderte Ansteuerspannung zur Verfügung steht.
Die Schaltungsanordnung 1 gemäß Figur 5 weist den Vorteil auf, dass eine besonders gute Entstörung eines Schaltnetzteiles ermöglicht wird. Dennoch ist nur ein Teil des dazu verwendeten Netzeingangsfilters 5 im Energiesparzustand Z0 mit dem Stromversorgungsnetz verbunden. Dabei weist die erste Filterschaltung 5A keinen Widerstand und keine x-Kondensatoren auf, so dass in ihm auch keine Wirkleistung sondern nur eine geringe Blindleistung auftritt. Der Wegfall eines Widerstandes wird unter anderem dadurch ermöglicht, dass zum Einen auf x-Kondensatoren in der ersten Filterschaltung 5A verzichtet wird, zum Anderen die Kapazität der y-Kondensatoren in der Größenordnung von 1 nF liegt, so dass aus sicherheitstechnischen Anforderungen auf einen Entladewiderstand verzichtet werden kann.
Zudem ist die Ansteuerschaltung 8 besonders einfach aufgebaut. Grundsätzlich muss jedes Halbleiterschaltelement SCR1 bis SCR3 getrennt angesteuert werden. Da die Thyristoren SCR2 und SCR3 aber ohnehin nur in einer Vorzugsrichtung leiten, können diese beiden Thyristoren mit einem gemeinsamen Steuersignal angesteuert werden. Durch die optionale Kopplung der Ansteuerschaltungen für den Thyristor SCR1 und die Thyristoren SCR2 und SCR3 wird der Bauteil- und Ansteueraufwand noch weiter reduziert.

### Bezugszeichenliste

- 1: Schaltanordnung
- 2: Netzeingang
- 3: Netzteil
- 4: Netzeingangsschaltung
- 5: Netzeingangsfilter
- 6: Gleichrichterschaltung
- 7: Überspannungsfilter
- 8: Ansteuerschaltung

## Patentansprüche

1. Schaltungsanordnung (1) mit einem Netzeingang (2) und wenigstens einem Netzteil (3A, 3B) zum Erzeugen einer Gleichspannung zum Betrieb eines elektronischen Geräts, umfassend eine zwischen den Netzeingang (2) und das wenigstens eine Netzteil (3A, 3B) geschaltete Netzeingangsschaltung (4) zum wahlweisen Trennen oder Gleichrichten einer über den Netzeingang (2) bereitgestellten Wechselspannung für das wenigstens eine Netzteil (3A, 3B), wobei die Netzeingangsschaltung (4) wenigstens ein erstes Halbleiterschaltelement (SCR1) zum Schalten eines ersten elektrischen Lastpfades mit einem Strombegrenzungselement (Rntc) von dem Netzeingang (2) zu dem wenigstens einen Netzteil (3A, 3B) und wenigstens ein zweites Halbleiterschaltelement (SCR2, SCR3) zum Schalten eines zweiten elektrischen Lastpfads von dem Netzeingang (2) zu dem wenigstens einen Netzteil (3A, 3B) und eine Ansteuerschaltung (8) zum Ansteuern des wenigstens einen ersten Halbleiterschaltelementes (SCR1) und des wenigstens einen zweiten Halbleiterschaltelementes (SCR2, SCR3) aufweist, **dadurch gekennzeichnet dass** die Ansteuerschaltung (8) dazu eingerichtet ist,
- in einem Energiesparzustand (Z0) das erste Halbleiterschaltelement (SCR1) und das zweite Halbleiterschaltelement (SCR2, SCR3) zu öffnen,
- in einer Übergangsphase von dem Energiesparzustand (Z0) in einen Betriebszustand (Z1) ein getaktetes Steuersignal mit einer ersten, niedrigeren Ansteuerfrequenz zu erzeugen und nur das erste Halbleiterschaltelement (SCR1) durch Ansteuerung mit dem erzeugten Steuersignal zumindest zeitweise zu schließen, wobei das zweite Halbleiterschaltelement (SCR2, SCR3) geöffnet bleibt, und
- in dem Betriebszustand (Z1) ein getaktetes Steuersignal mit einer zweiten, höheren Ansteuerfrequenz zu erzeugen und wenigstens das zweite Schaltelement (SCR2, SCR3) durch Ansteuerung mit dem erzeugten Steuersignal zumindest zeitweise zu schließen.

2. Schaltungsanordnung (1) nach Anspruch 1,
**dadurch gekennzeichnet, dass** das wenigstens erste Halbleiterschaltelement (SCR1) und/oder das wenigstens zweite Halbleiterschaltelement (SCR2, SCR3) ein Thyristor ist.

3. Schaltungsanordnung (1) nach Anspruch 1 oder 2,
**dadurch gekennzeichnet, dass** die Netzeingangsschaltung (4) wenigstens eine Gleichrichterschaltung (6) mit einem Halbleiterbrückengleichrichter umfasst und das wenigstens eine zweite Halbleiterschaltelement (SCR2, SCR3) einen Teil des Halbleiterbrückengleichrichters bildet.

4. Schaltungsanordnung nach einem der Ansprüche 1 bis 3, **gekennzeichnet durch** ein Netzeingangsfilter (5), wobei das Netzeingangsfilter (5) eine zwischen dem Netzeingang (2) und der Netzeingangsschaltung (4) angeordnete erste Filterschaltung (5A) und eine zwischen der Netzeingangsschaltung (4) und dem wenigstens einen Netzteil (3A, 3B) angeordnete zweite Filterschaltung (5B) umfasst.

5. Schaltungsanordnung nach Anspruch 4, wobei nur die zweite Filterschaltung (5B) wenigstens einen Widerstand (Rdis) zum Entladen wenigstens eines Kondensators (C1, Cx1, Cx2) aufweist, so dass die Filterschaltung (5) in dem Energiesparzustand (Z0), in dem das erste Halbleiterschaltelement (SCR1) und das zweite Halbleiterschaltelement (SCR2, SCR3) geöffnet sind, keine Wirkleistung aufnimmt.

6. Schaltungsanordnung nach Anspruch 4 oder 5, **gekennzeichnet durch** eine hinter dem zweiten Netzeingangsfilter (5B) angeordnete Schaltung zur aktiven Leistungsfaktorkorrektur (PFC) sowie einen hinter der Schaltung zur Leistungsfaktorkorrektur (PFC) angeordneten Speicherkondensator (Cb).

7. Schaltungsanordnung nach einem der Ansprüche 4 bis 6,
**dadurch gekennzeichnet, dass** die erste Filterschaltung (5A) y-Kondensatoren mit einer Kapazität von weniger als 68 nF, insbesondere weniger als 1 nF, aufweisen.

8. Schaltungsanordnung (1) nach einem der Ansprüche 1 bis 7, **gekennzeichnet durch** ein Überspannungsfilter (7), wobei das Überspannungsfilter (7) zwischen der Netzeingangsschaltung (4) und dem wenigstens einen Netzteil (3A, 3B) angeordnet ist.

9. Schaltungsanordnung (1) nach einem der Ansprüche 1 bis 8,
**dadurch gekennzeichnet, dass** die Schaltungsanordnung (1) dazu eingerichtet ist, die Ansteuerschaltung (8) in dem Energiesparzustand (Z0) und/oder der Übergangsphase durch einen Energiespeicher (9) des elektronischen Gerätes mit Energie zu versorgen.

10. Schaltungsanordnung nach Anspruch 9,
**dadurch gekennzeichnet, dass** der Energiespeicher (9) in dem elektronischen Gerät angeordnet ist.

11. Schaltungsanordnung nach Anspruch 9 oder 10,
**dadurch gekennzeichnet, dass** die Schaltungsanordnung (1) dazu eingerichtet ist, die Ansteuerschaltung (8) in dem Betriebszustand (Z1) durch das wenigstens eine Netzteil (3A, 3B) mit Energie zu versorgen.

12. Schaltungsanordnung nach einem der Ansprüche 1 bis 11,
**dadurch gekennzeichnet, dass** die Ansteuerschaltung (8) wenigstens einen Übertrager (T0, T1, T2) umfasst, der das elektronische Gerät galvanisch von der Netzeingangsschaltung trennt.

13. Schaltungsanordnung (1) nach einem der Ansprüche 1 bis 11, **dadurch gekennzeichnet, dass** die Ansteuerschaltung (8) wenigstens ein drittes Halbleiterschaltelement (Q2) umfasst, durch das eine erste Ansteuerschaltung zur Ansteuerung des ersten Halbleiterschaltelementes (SCR1) und eine zweite Ansteuerschaltung zur Ansteuerung des wenigstens einen zweiten Halbleiterschaltelementes (SCR2, SCR3) miteinander koppelbar sind.

14. Arbeitsverfahren zum Ansteuern einer Netzeingangsschaltung (4) mit wenigstens einem ersten Halbleiterschaltelement (SCR1) zum Schalten eines ersten elektrischen Lastpfads mit einem Strombegrenzungselement (Rntc) von einem Netzeingang (2) zu wenigstens einem Netzteil (3A, 3B) und wenigstens einem zweiten Halbleiterschaltelement (SCR2, SCR3) zum Schalten eines zweiten elektrischen Lastpfades von dem Netzeingang (2) zu dem Netzteil (3A, 3B), umfassend die Schritte:
- Öffnen des ersten und des zweiten Halbleiterschaltelementes (SCR1, SCR2, SCR3) in einem Energiesparzustand (Z0),
- zumindest zeitweise Schließen des ersten Halbleiterschaltelementes (SCR1) und Offenlassen des wenigstens einen zweiten Halbleiterschaltelementes (SCR2, SCR3) in einer Übergangsphase von dem Energiesparzustand (Z0) in einen Betriebszustand (Z1), wobei in der Übergangsphase ein getaktetes Steuersignal mit einer ersten Ansteuerfrequenz erzeugt wird, und
- zumindest zeitweise Schließen des wenigstens einen zweiten Halbleiterschaltelementes (SCR2, SCR3) in den Betriebszustand (Z1), wobei in dem Betriebszustand (Z1) ein getaktetes Steuersignal mit einer zweiten Ansteuerfrequenz erzeugt wird, die größer ist als die erste Ansteuerfrequenz.

15. Arbeitsverfahren gemäß Anspruch 14, **gekennzeichnet durch** zumindest zeitweises Schließen des ersten Halbleiterschaltelementes (SCR1) und Öffnen des wenigstens einen zweiten Halbleiterschaltelementes in einer Übergangsphase von dem Betriebszustand (Z1) in den Energiesparzustand (Z0), insbesondere bei Erkennung einer Störung eines mit dem Netzeingang (2) gekoppelten Versorgungsnetzes.

## Claims

1. A circuit arrangement (1) with a power input (2) and at least one power supply unit (3A, 3B) for generating a DC voltage for operating an electronic device, comprising a power input circuit (4) connected between the power input (2) and the at least one power supply unit (3A, 3B) for selectively disconnecting or rectifying an AC voltage provided via the power input (2) for the at least one power supply unit (3A, 3B), wherein the power input circuit (4) comprises at least one first semiconductor switching element (SCR1) for switching a first electrical load path with a current limiting element (Rntc) from the power input (2) to the at least one power supply unit (3A, 3B), and at least one second semiconductor switching element (SCR2, SCR3) for switching a second electrical load path from the power input (2) to the at least one power supply unit (3A, 3B), and a drive circuit (8) that drives the at least one first semiconductor switching element (SCR1) and the at least one second semiconductor switching element (SCR2, SCR3), **characterized in that** the drive circuit (8) is configured to
- open the first semiconductor switching element (SCR1) and the second semiconductor switching element (SCR2, SCR3) in an energy-saving state (Z0),
- in a transition phase from the energy-saving state (Z0) to an operating state (Z1), generate a clocked control signal with a first, lower drive frequency and to close only the first semiconductor switching element (SCR1) at least temporarily by driving with the generated control signal, and wherein the second semiconductor switching element (SCR2, SCR3) remains open, and
- in the operating state (Z1), to generate a clocked control signal with a second, higher drive frequency and to close at least the second switching element (SCR2, SCR3) at least temporarily by driving with the generated control signal.

2. The circuit arrangement (1) according to claim 1, **characterized in that** the at least first semiconductor switching element (SCRE1) and/or the at least second semiconductor switching element (SCR2, SCR3) is a thyristor.

3. Circuit arrangement (1) according to claim 1 or claim 2, **characterized in that** the power input circuit (4) includes at least one rectifying circuit (6) with a semiconductor bridge rectifier and the at least one second semiconductor switching element (SCR2, SCR3) forms a part of the semiconductor bridge rectifier.

4. Circuit arrangement according to one of claims 1 to 3, **characterized by** a power input filer (5), wherein the power input filter (5) includes a first filter circuit (5A) arranged between the power input (2) and the power input circuit (4), and a second filter circuit (5B) arranged between the power input circuit (4) and the at least one power supply unit (3A, 3B).

5. Circuit arrangement according to claim 4, wherein only the second filter circuit (5B) comprises at least one resistor (Rdis) for discharging of at least one capacitor (C1, Cx1, Cx2), so that the filter circuit (5), in the energy-saving state (Z0), in which the first semiconductor switching element (SCR1) and the second semiconductor switching element (SCR2, SCR3) are open, does not receive active power.

6. Circuit arrangement according to claim 4 or 5, **characterized by** a circuit for active power factor correction (PFC) arranged downstream of the second power input filter (5B) as well as a storage capacitor (Cb) arranged downstream of the circuit for active power factor correction (PFC).

7. Circuit arrangement according to one of claims 4 to 6, **characterized in that** the first filter circuit (5A) comprises y-capacitors with a capacity of less than 68 nF, in particular less than 1 nF.

8. Circuit arrangement (1) according to one of claims 1 to 7, **characterized by** an overvoltage filter (7), wherein the overvoltage filter (7) is arranged between the power input circuit (4) and the at least one power supply unit (3A, 3B).

9. Circuit arrangement (1) according to one of claims 1 to 8, **characterized in that** the circuit arrangement (1) is configured to supply the drive circuit (8) in the energy-saving state (Z0) and/or in the transition phase with energy by means of an energy storage device (9) of the electronic device.

10. Circuit arrangement according to claim 9, **characterized in that** the energy storage device (9) is arranged in the electronic device.

11. Circuit arrangement according to claim 9 or 10, **characterized in that** the circuit arrangement (1) is configured to supply the drive circuit (8) in the operating state (Z1) with energy by means of the at least one power supply unit (3A, 3B).

12. The circuit arrangement according to one of claims 1 to 11, **characterized in that** the drive circuit (8) includes at least one transformer (T0, T1, T2) which galvanically isolates the electronic device from the power input circuit.

13. The circuit arrangement (1) according to one of claims 1 to 11, **characterized in that** the drive circuit (8) includes at least one third semiconductor switching element (Q2), by means of which a first drive circuit for driving the first semiconductor switching element (SCR1) and a second drive circuit for driving the at least one second semiconductor switching element (SCR2, SCR3) can be coupled to one another.

14. An operating method for driving a power input circuit (4) with at least one first semiconductor switching element (SCR1) for switching a first electrical load path with a current-limiting element (Rntc) from a power input (2) to at least one power supply unit (3A, 3B), and at least one second semiconductor switching element (SCR2, SCR3) for switching a second electrical load path from the power input (2) to the power supply unit (3A, 3B), comprising the steps of:
- opening the first and the second semiconductor switching elements (SCR1, SCR2, SCR3) in an energy-saving state (Z0),
- at least temporarily closing the first semiconductor switching element (SCR1) and leaving the at least one second semiconductor switching element (SCR2, SCR3) open in a transition phase from the energy-saving state (Z0) to an operating state (Z1), wherein a clocked control signal with a first drive frequency is generated in the transition phase, and
- at least temporarily closing the at least one second semiconductor switching element (SCR2, SCR3) in the operating state (Z1), wherein a clocked control signal with a second drive frequency higher than the first drive frequency is generated in the operating state (Z1) .

15. The operating method according to claim 14, **characterized by** at least temporarily closing of the first semiconductor switching element (SCR1) and opening of the at least one second semiconductor switching element in a transition phase from the operating state (Z1) to the energy-saving state (Z0), in particular upon recognizing a malfunction of a supply grid coupled with the power input (2)

## Revendications

1. Circuiterie (1) avec une entrée de réseau (2) et au moins un bloc d'alimentation (3A, 3B) conçu pour produire une tension continue permettant de faire fonctionner un appareil électronique, comprenant un circuit d'entrée de réseau (4) qui est branché entre l'entrée de réseau (2) et au moins un bloc d'alimentation (3A, 3B) et prévu pour, au choix, couper ou redresser une tension alternative fournie par l'entrée de réseau (2) et destinée à au moins un bloc d'alimentation (3A, 3B), le circuit d'entrée de réseau (4) présentant au moins un premier élément de commutation à semi-conducteur (SCR1) pour connecter un premier chemin de charge électrique avec un élément limiteur de courant (Rntc) depuis l'entrée de réseau (2) jusqu'à au moins un bloc d'alimentation (3A, 3B) et au moins un deuxième élément de commutation à semi-conducteur (SCR2, SCR3) pour connecter un deuxième chemin de charge électrique depuis l'entrée de réseau (2) jusqu'à au moins un bloc d'alimentation (3A, 3B) et un circuit d'excitation (8) pour exciter au moins un premier élément de commutation à semi-conducteur (SCR1) et au moins un deuxième élément de commutation à semi-conducteur (SCR2, SCR3), **caractérisée en ce que** le circuit d'excitation (8) est configuré pour
- ouvrir le premier élément de commutation à semi-conducteur (SCR1) et le deuxième élément de commutation à semi-conducteur (SCR2, SCR3) en mode d'économie d'énergie (Z0),
- générer, dans une phase de transition entre le mode d'économie d'énergie (Z0) et un état de fonctionnement (Z1), un signal de commande cadencé avec une première fréquence d'excitation plus faible et fermer, au moins temporairement, seulement le premier élément de commutation à semi-conducteur (SCR1) par une excitation avec le signal de commande engendré, le deuxième élément de commutation à semi-conducteur (SCR2, SCR3) restant ouvert et,
- générer dans l'état de fonctionnement (Z1) un signal de commande cadencé avec une deuxième fréquence d'excitation plus élevée et fermer, au moins temporairement, le deuxième élément de commutation (SCR2, SCR3) par une excitation avec le signal de commande engendré.

2. Circuiterie (1) selon la revendication 1, **caractérisée en ce que** l'au moins un premier élément de commutation à semi-conducteur (SCR1) et/ou l'au moins un deuxième élément de commutation à semi-conducteur (SCR2, SCR3) est un thyristor.

3. Circuiterie (1) selon la revendication 1 ou 2, **caractérisée en ce que** le circuit d'entrée de réseau (4) comprend au moins un circuit redresseur (6) avec un pont redresseur à semi-conducteur et **en ce que** l'au moins un deuxième élément de commutation à semi-conducteur (SCR2, SCR3) constitue un part du pont redresseur à semi-conducteur.

4. Circuiterie selon l'une quelconque des revendications 1 à 3, **caractérisée par** un filtre d'entrée de réseau (5), lequel filtre d'entrée de réseau (5) comprend un premier circuit de filtrage (5A) disposé entre l'entrée de réseau (2) et le circuit d'entrée de réseau (4) ainsi qu'un deuxième circuit de filtrage (5B) disposé entre le circuit d'entrée de réseau (4) et l'au moins un bloc d'alimentation (3A, 3B).

5. Circuiterie selon la revendication 4, dans lequel seulement le deuxième circuit de filtrage (5B) présente au moins une résistance (Rdis) pour décharger au moins un condensateur (C1, Cx1, Cx2) de sorte que le circuit de filtrage (5) n'absorbe aucune puissance active dans le mode d'économie d'énergie (Z0) dans lequel le premier élément de commutation à semi-conducteur (SCR1) et le deuxième élément de commutation à semi-conducteur (SCR2, SCR3) sont ouverts.

6. Circuiterie selon la revendication 4 ou 5, **caractérisée par** un circuit de correction active du facteur de puissance (PFC) disposé derrière le deuxième filtre d'entrée de réseau (5B) ainsi que par un condensateur à accumulateur (Cb) disposé derrière le circuit de correction du facteur de puissance (PFC).

7. Circuiterie selon l'une quelconque des revendications 4 à 6, **caractérisée en ce que** le premier circuit de filtrage (5A) comprend des condensateurs Y avec une capacité inférieure à 68 nF, en particulier inférieure à 1 nF.

8. Circuiterie (1) selon l'une quelconque des revendications 1 à 7, **caractérisée par** un filtre de surtension (7), lequel filtre de surtension (7) est disposé entre le circuit d'entrée de réseau (4) et l'au moins un bloc d'alimentation (3A, 3B).

9. Circuiterie (1) selon l'une quelconque des revendications 1 à 8, **caractérisée en ce que** la circuiterie (1) est configurée pour que le circuit d'excitation (8) soit alimenté en énergie par un accumulateur d'énergie (9) de l'appareil électronique dans le mode d'économie d'énergie (Z0) et/ou la phase de transition.

10. Circuiterie selon la revendication 9, **caractérisée en ce que** l'accumulateur d'énergie (9) est agencé dans l'appareil électronique.

11. Circuiterie selon la revendication 9 ou 10, **caractérisée en ce que** la circuiterie (1) est configurée pour que le circuit d'excitation (8) soit alimenté en énergie par au moins un bloc d'alimentation (3A, 3B) dans l'état de fonctionnement (Z1).

12. Circuiterie selon l'une quelconque des revendications 1 à 11, **caractérisée en ce que** le circuit d'excitation (8) comprend au moins un transmetteur (T0, T1, T2) qui isole galvaniquement l'appareil électronique du circuit d'entrée de réseau.

13. Circuiterie (1) selon l'une quelconque des revendications 1 à 11, **caractérisée en ce que** le circuit d'excitation (8) comprend au moins un troisième élément de commutation semi-conducteur (Q2) par moyen duquel un premier circuit d'excitation pour exciter le premier élément de commutation à semi-conducteur (SCR1) et un deuxième circuit d'excitation pour exciter au moins un deuxième élément de commutation à semi-conducteur (SCR2, SCR3) peuvent être couplés l'un à l'autre.

14. Procédé d'opération pour commander un circuit d'entrée de réseau (4) avec au moins un premier élément de commutation à semi-conducteur (SCR1) pour connecter un premier chemin de charge électrique avec un élément limiteur de courant (Rntc) depuis une entrée de réseau (2) jusqu'à au moins un bloc d'alimentation (3A, 3B) et au moins un deuxième élément de commutation à semi-conducteur (SCR2, SCR3) pour connecter un deuxième chemin de charge électrique depuis l'entrée de réseau (2) jusqu'au bloc d'alimentation (3A, 3B), comprenant les étapes suivantes :
- ouvrir le premier et le deuxième élément de commutation à semi-conducteur (SCR1, SCR2, SCR3) dans un mode d'économie d'énergie (Z0),
- fermer au moins temporairement le premier élément de commutation à semi-conducteur (SCR1) et laisser ouvert au moins un deuxième élément de commutation à semi-conducteur (SCR2, SCR3) dans une phase de transition entre le mode d'économie d'énergie (Z0) et un état de fonctionnement (Z1), un signal de commande cadencé étant généré avec une première fréquence d'excitation dans la phase de transition, et
- fermer au moins temporairement l'au moins un deuxième élément de commutation à semi-conducteur (SCR2, SCR3) dans l'état de fonctionnement (Z1), un signal de commande cadencé étant généré dans l'état de fonctionnement (Z1) avec une deuxième fréquence d'excitation qui est supérieure à la première fréquence d'excitation.

15. Procédé d'opération selon la revendication 14, **caractérisée par** la fermeture au moins temporaire du premier élément de commutation à semi-conducteur (SCR1) et l'ouverture de l'au moins un deuxième élément de commutation à semi-conducteur dans une phase de transition entre l'état de fonctionnement (Z1) et le mode d'économie d'énergie (Z0), en particulier lorsqu'une anomalie est registrée dans un réseau d'alimentation couplé à l'entrée de réseau (2).
